# EUROPEAN PATENT APPLICATION

(11) **EP 2 103 899 A2**
(43) Date of publication of application: **23.09.2009**
(21) Application number: 09001086.9
(22) Date of filing: 27.01.2009
(51) Int. Cl.: G01B 11/02, G01B 11/30

(54) **Optical displacement measuring apparatus and multifunctional optical displacement measuring apparatus**

(30) Priority: 18.03.2008 JP 2008069908
(71) Applicant: Mitutoyo Corporation, Kanagawa 213-0012 (JP)
(72) Inventor: Iwamoto, Tadashi, Kawasaki Kanagawa 213-0012 (JP)
(74) Representative: Altenburg, Udo

(57) **Abstract**

In an optical displacement measuring apparatus, the displacement of a measuring object can be measured while increasing the degree of freedom in length of a lens-barrel portion for introducing light from a light source to the measuring object.

An optical displacement measuring apparatus (10) includes a lens-barrel portion (22) introducing light from a light source (70) to an objective optical system as approach route light (82); a prism optical element (26/a) mirror optical element (28), as the objective optical system, leading the light to a side (6) of a casing (8) that is a measuring object by changing the optical path of the approach route light (82) so as to return the light to the lens-barrel portion (22) as way back light (84) in parallel with the approach route light (82) by refracting the regularly reflected light from the side; an imaging lens (76) having an optical axis (86) in parallel with the approach route light (82) for condensing the way back light; a pinhole optical element (78) arranged at the focal point of the imaging lens (76) to allow only the way back light (84) in parallel with the approach route light (82) to pass through; and an optical positional detecting device (80) detecting the position of the light that has passed through the pinhole optical element (78).

## Description

### [Technical Field]

The present invention relates to optical displacement measuring apparatuses and multifunctional optical displacement measuring apparatuses and in particular, it relates to an optical displacement measuring apparatus that detects reflected light from a measuring object with a detector to measure the displacement between an objective optical system and the measuring object by irradiating the measuring object with light from a light source via the objective optical system and also to a multifunctional optical displacement measuring apparatus that can correspond to a plurality of kinds of the measuring object.

### [Background Art]

As for contactless measuring the displacement of an object, Patent Documents 1 and 2 describe conventional techniques, such as "TRIANGULATION METHOD USING LIGHT", "OPTICAL TRACER METHOD", and "AUTOMATIC FOCUSING TECHNIQUE".

In "TRIANGULATION METHOD USING LIGHT" herein, by irradiating a measuring target surface with a light beam from semiconductor laser, etc., images of the light beam reflected from the surface are focused with a collective lens on an optical positional detector located in a direction different from the irradiating direction, and when the surface moves, the beam position on the positional detector is changed, so that the displacement of the measuring target surface can be obtained at high speed by a triangulation principle. However, in principle of the triangulation method, it is necessary for high-accuracies to have a large distance between a light source and the optical positional detector. Hence, a sufficient space is required for the measurement in the vicinity of the measuring target surface, so that this method is not suitable for the displacement measurement of a work within a casing having a narrow inlet, for example.

"OPTICAL TRACER METHOD" includes a critical angular method, an astigmatic method, a knife edge method, and a heterodyne method; in any of them, a micro sport is focused on a target object to detect that state by condensing the reflected light. Hence, the sensitivity is extremely high and the size and weight are small, so that the method is used in an optical tracer for an optical surface roughness meter. However, the detection range in high-accuracies is limited to the vicinity of an in-focus position, so that the measurement range is significantly small. For example, the measurement is usually possible within a range of several µm. The method also has a problem that the measured value depends on the surface state of the object.

In "AUTOMATIC FOCUSING TECHNIQUE", by consistently focusing a lens on an object, the displacement of the object can be measured from the displacement of the lens at that time, so that the measurement range can be increased. However, in autofocusing, if the displacement of the object surface is discontinuous due to a step, for example, the direction of the tracking the lens may be lost to require additional search operation, so that the high-speed measurement may become difficult.

Then, Patent Document 1 discloses an optical displacement measuring instrument that uses characters in that a conical objective lens is arranged in front of an object; a light beam from the backside of the objective lens is refracted on a conical interface of the objective lens, while passing through the objective lens, to enter the object; the light beam reflected by the object returns to the objective lens; and the light beam is again refracted on the conical interface to be in parallel with the original light beam. Patent Document 1 describes that since the light beam returned is offset from the optical axis of the objective lens in accordance with the distance between the object and the objective lens, i.e., the displacement of the object, the displacement of the object can be measured based on the offset.

Also, Patent Document 2 discloses an optical displacement measuring instrument in that a conical objective prism is arranged in front of a measuring target object; and a returning light beam deviated in parallel with the optical axis of the objective prism is entered to the target object from the backside of the objective prism. Also, in this case, when the light beam reflected by the target object after passing through the objective prism returns to pass through the objective prism, the light beam becomes a way back beam parallel with the approach route beam and the offset from the optical axis of the way back beam is changed in accordance with the displacement of the measuring target object. Patent Document 2 also describes that the way back beam is condensed on a focal point with a condenser lens and the effect of diffuse light is suppressed by a pinhole optical element arranged at the focal point.

[Patent Document 1] Japanese Unexamined Patent Application Publication No. 2005-265616
[Patent Document 2] Japanese Unexamined Patent Application Publication No. 2006-58115

### [Disclosure of the Invention]

### [Problems to be Solved by the Invention]

The use of the conical objective optical element described in Patent Documents 1 and 2 enables the optical element to have a compact end portion so as to measure a displacement of a work within a casing having a narrow inlet and to measure a displacement within a wide range at high speed without any mechanical operation.

The demand for the displacement measuring a work within a casing having a narrow inlet includes the displacement measuring of the bottom surface of a deep hole and the displacement measuring of the side of a deep hole. When the hole is deep, it is necessary to consider the effect of the length of a lens-barrel portion for leading light into the hole. For the same deep hole, not only on the bottom surface but also on the side, the displacement measurement may be demanded.

It is an object of the present invention to provide an optical displacement measuring apparatus capable of measuring a displacement of a measuring target object by suppressing the effect of a length of a lens-barrel portion for leading light to the measuring target object from a light source. It is another object is to provide an optical displacement measuring apparatus capable of measuring a displacement of a side within a casing having a narrow inlet. It is still another object is to provide an optical displacement measuring apparatus capable of measuring a displacement of a measuring target object by suppressing the effect of the length of the lens-barrel portion for leading light to the measuring target object from a light source, and being also capable of corresponding to a plurality of kinds of the measuring object. The means below will contribute to at least one of the above objects.

### [Means for Solving the Problems]

In an optical displacement measuring apparatus according to the present invention measuring the displacement between an objective optical system and a measuring object by irradiating the measuring object with light from a light source via a light introducing section including the objective optical system to detect the reflected light from the measuring object with a detection section, the light introducing section includes a lens-barrel portion introducing light from the light source to the objective optical system as approach route light; and a prism optical element, as the objective optical system, leading the approach route light to the side of the measuring object by changing the optical path of the approach route light so as to return the light to the lens-barrel portion as way back light by refracting the light from the side of the measuring object, the detection section includes an imaging lens having an optical axis in parallel with the approach route light for condensing the way back light; a pinhole optical element arranged at the focal point of the imaging lens to allow only the component of the way back light in parallel with the approach route light to pass through; and an optical positional detecting device detecting the projected position of the light that has passed through the pinhole optical element, and the prism optical element includes at least one inclined plane cut at a plane inclined to its optical axis at a predetermined angle.

In the optical displacement measuring apparatus according to the present invention, preferably, the light introducing section, as the objective optical system, further includes a mirror optical element arranged between the prism optical element and a measuring object displacing in a perpendicular direction to the axis of the lens-barrel portion to lead the light to enter the measuring object by changing the optical path of the light from the prism optical element so as to return the light to the prism optical element by changing the optical path of the reflected light from the measuring object.

In a multifunctional optical displacement measuring apparatus according to the present invention measuring the displacement between an objective optical system and a measuring object by irradiating the measuring object with light from a light source via a light introducing section including the objective optical system to detect the reflected light from the measuring object with a detection section, the multifunctional optical displacement measuring apparatus includes a body block including the light source and the detection section; and a plurality of kinds of an end block having an attachment fixture replaceably attached to the body block and including the light introducing section having the objective optical system that corresponds to a plurality of kinds of the measuring object, in which any one of the plurality of kinds of the end block attached to the body block includes a lens-barrel portion leading the light from each light source to the objective optical system as approach route light and a prism optical element, as the objective optical system, leading the light to the side of the measuring object by changing the optical path of the approach route light to return the light as way back light to the lens-barrel portion by refracting the light from the side of the measuring object, in which the detection section of the body block includes an imaging lens having an optical axis in parallel with the approach route light for condensing the way back light; a pinhole optical element arranged at the focal point of the imaging lens to allow only the component of the way back light in parallel with the approach route light to pass through; and an optical positional detecting device detecting the projected position of the light that has passed through the pinhole optical element, and in which the prism optical element includes at least one inclined plane cut at a plane inclined to its optical axis at a predetermined angle.

In the multifunctional optical displacement measuring apparatus according to the present invention, preferably, the plurality of kinds of the end block include a first end block including the prism optical element that corresponds to a measuring object that is displacing in a perpendicular direction to the axis of the lens-barrel portion, the measuring object plane of the measuring object being obliquely irradiated with light, the prism optical element having a plurality of inclined planes, and further a mirror optical element arranged between the measuring object and the prism optical element to allow the light to enter the measuring object by changing the optical path of the light from the prism optical element so as to return the light to the prism optical element by changing the optical path of the reflected light from the measuring object; a second end block including the prism optical element that corresponds to a measuring object that is displacing in a perpendicular direction to the axis of the lens-barrel portion, the measuring object plane of the measuring object being perpendicularly irradiated with light, the prism optical element having a plane that is perpendicularly cut to the optical axis and at least one inclined plane inclined to the optical axis, and further the mirror optical element arranged between the measuring object and the prism optical element to allow the light to enter the measuring object by changing the optical path of the light from the prism optical element so as to return the light to the prism optical element by changing the optical path of the reflected light from the measuring object; a third end block including the prism optical element that corresponds to a measuring object that is displacing in the axial direction of the lens-barrel portion, the measuring object plane of the measuring object being obliquely irradiated with light, the prism optical element having a plurality of inclined planes; and a fourth end block including the prism optical element that corresponds to a measuring object that is displacing in the axial direction of the lens-barrel portion, the measuring object plane of the measuring object being perpendicularly irradiated with light, the prism optical element having a plane perpendicularly cut to the optical axis and at least one inclined plane inclined to the optical axis.

### [Advantages]

By at least one of the configurations described above, the optical displacement measuring apparatus includes the lens-barrel portion introducing light from the light source to the objective optical system as the approach route light; and the prism optical element, as the objective optical system, leading the approach route light to the side of the measuring object by changing the optical path of the approach route light so as to return the light to the lens-barrel portion as the way back light by refracting the light from the side of the measuring object; the imaging lens having an optical axis in parallel with the approach route light for condensing the way back light; the pinhole optical element arranged at the focal point of the imaging lens to allow only the component of the way back light in parallel with the approach route light to pass through; and the optical positional detecting device detecting the projected position of the light that has passed through the pinhole optical element.

Thereby, the light passing through the pinhole optical element can become only the way back light in parallel with the approach route light. Sine the prism optical element has at least one inclined plane cut at a plane inclined to its optical axis at a predetermined angle, using a simple optical element, the light can be led to the side of the measuring object by changing the optical path of the approach route light so as to return the light to the lens-barrel portion as the way back light by refracting the light from the side of the measuring object.

When the measuring object is herein displaced, the distance of the light passing through the pinhole optical element from the optical axis of the imaging lens becomes different while keeping parallel with the approach route light as it is. Thereby, the projected position of the light is changed on the light positional detecting device, so that the displacement of the measuring object can be measured from the change in projected position. When the approach route light is in parallel with the axis of the lens-barrel portion, the way back light is also in parallel with the axis of the lens-barrel portion, so that the elongation of the length of the lens-barrel portion does not affect the displacement measuring. Therefore, the displacement of the measuring object can be measured by suppressing the effect of the length of the lens-barrel portion introducing the light from the light source to the measuring object.

The optical displacement measuring apparatus includes the mirror optical element arranged between the prism optical element and a measuring object displacing in a perpendicular direction to the axis of the lens-barrel portion to lead the light to enter the measuring object by changing the optical path of the light from the prism optical element so as to return the light to the prism optical element by changing the optical path of the reflected light from the measuring object. For example, when the prism optical element and the mirror optical element are arranged at the end portion to have a necessary length of the lens-barrel portion, the displacement of the side within the casing having a narrow inlet can be measured.

Also, the multifunctional optical displacement measuring apparatus includes a body block including the light source and the detection section; and a plurality of kinds of an end block having an attachment fixture replaceably attached to the body block and including a light introducing section having the objective optical system that corresponds to a plurality of kinds of the measuring object. Any one of the plurality of kinds of the end block attached to the body block includes a lens-barrel portion leading the light from each light source to the objective optical system as the approach route light; the prism optical element, as the objective optical system, leading the light to the side of the measuring object by changing the optical path of the approach route light to return the light as the way back light to the lens-barrel portion by refracting the light from the side of the measuring object; the imaging lens having an optical axis in parallel with the approach route light for condensing the way back light; the pinhole optical element arranged at the focal point of the imaging lens to allow only the component of the way back light in parallel with the approach route light to pass through; and the optical positional detecting device detecting the projected position of the light that has passed through the pinhole optical element.

Thereby, the light passing through the pinhole optical element can become only the way back light in parallel with the approach route light in the reflected light from the measuring object. Since the prism optical element includes at least one inclined plane cut at a plane inclined to its optical axis at a predetermined angle, using a simple optical element, the light can be led to the side of the measuring object by changing the optical path of the approach route light so as to return the light to the lens-barrel portion as the way back light by refracting the light from the side of the measuring object.

When the measuring object is herein displaced, the distance of the light passing through the pinhole optical element from the optical axis of the imaging lens becomes different while keeping parallel with the approach route light as it is. Thereby, the projected position of the light is changed on the light positional detecting device, so that the displacement of the measuring object can be measured from the change in projected position. When the approach route light is in parallel with the axis of the lens-barrel portion, the way back light is also in parallel with the axis of the lens-barrel portion, so that the elongation of the length of the lens-barrel portion does not affect the displacement measuring. Therefore, the end block is obtained having the lens-barrel portion changed in length to correspond to the measuring object and having the objective optical system changed in configuration to correspond to the measuring object, so that the multifunctional optical displacement measuring apparatus can correspond to various measuring objects while keeping the body block in common.

The multifunctional optical displacement measuring apparatus includes the first end block that corresponds to a measuring object that is displacing in a perpendicular direction to the axis of the lens-barrel portion and the measuring object plane of the measuring object is obliquely irradiated with light; the second end block that corresponds to a measuring object that is displacing in a perpendicular direction to the axis of the lens-barrel portion and the measuring object plane of the measuring object is perpendicularly irradiated with light; the third end block that corresponds to a measuring object that is displacing in the axial direction of the lens-barrel portion and the measuring object plane of the measuring object is obliquely irradiated with light; and the fourth end block that corresponds to a measuring object that is displacing in the axial direction of the lens-barrel portion and the measuring object plane of the measuring object is perpendicularly irradiated with light.

Using the first or the second end block, the displacement of the side wall can be measured in the casing having a narrow inlet, for example; using the third or the fourth end block, the displacement of the far wall can be measured in the casing having a narrow inlet, for example. Also, when using the second end block, even if the measuring object is displaced in a perpendicular direction to the axis of the lens-barrel portion, the displacement can be measured at substantially the same measuring point. When using the fourth end block, even if the measuring object is displaced in the axial direction of the lens-barrel portion, the displacement can be measured at substantially the same measuring point. When the measuring object is a mirror-finished surface, the component of the way back light in parallel with the approach route light cannot be produced; however in the first and third end blocks, there is no such a limit. In such a manner, by appropriately selecting the end block, the displacement can be measured to correspond to a plurality of kinds of the measuring object.

### [Best Mode for Carrying Out the Invention]

Embodiments according to the present invention will be described below with reference to the drawings in detail. The materials, etc., which will be described below, are examples in the description, so that they may be appropriately changed in accordance with specifications, etc., of an optical displacement measuring apparatus.

### [Brief Description of the Drawings]

Fig. 1 is a drawing showing the configuration of an optical displacement measuring apparatus according to an embodiment of the present invention for measuring the displacement of a side by obliquely irradiating the side within a casing having a narrow hole with light.
Fig. 2 is a drawing showing the configuration of an optical displacement measuring apparatus according to an embodiment of the present invention for measuring the displacement of a side by perpendicularly irradiating the side within a casing having a narrow hole with light.
Fig. 3 is a drawing showing the configuration of an optical displacement measuring apparatus according to an embodiment of the present invention for measuring the displacement of a side by obliquely irradiating the bottom plane of the far wall of a casing having a narrow hole with light.
Fig. 4 is a drawing showing the configuration of an optical displacement measuring apparatus according to an embodiment of the present invention for measuring the displacement of a side by perpendicularly irradiating the bottom plane of the far wall of a casing having a narrow hole with light.
Fig. 5 is a drawing showing the configuration of a multifunctional optical displacement measuring apparatus according to an embodiment of the present invention.

Also, like reference symbols designate like components common in the drawings below, and the redundant description is omitted. Also, in the description of the drawings, the symbols that have earlier described may be used if necessary.

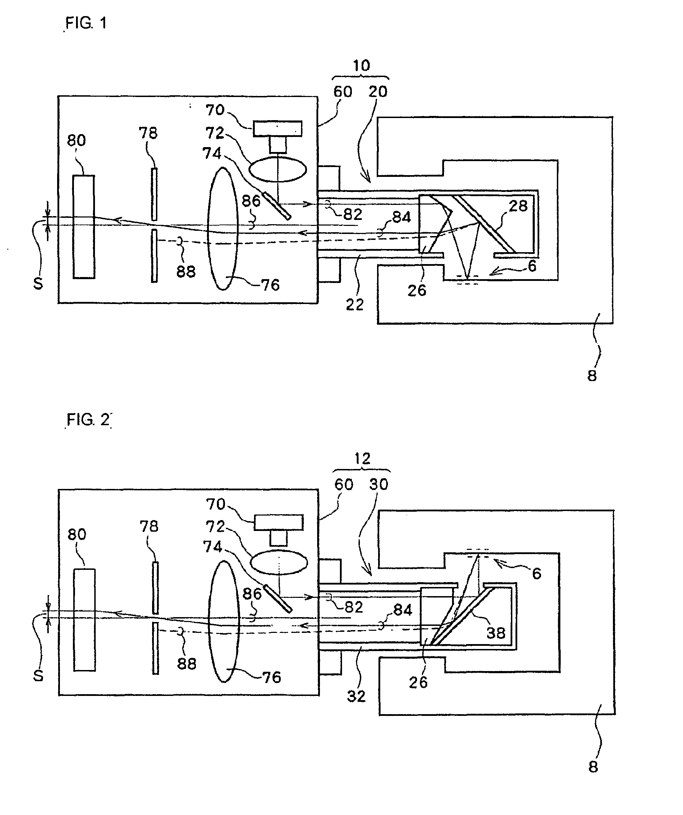

Fig. 1 is a drawing showing the configuration of an optical displacement measuring apparatus 10. In the drawing, although not a component of the optical displacement measuring apparatus 10, a casing 8 having a narrow hole is shown. A measuring object herein is a side 6 inside the casing 8. The optical displacement measuring apparatus 10 has a function to measure the displacement of the side 6 inside the casing 8.

The optical displacement measuring apparatus 10 includes an incidence optical system including a light source 70, a light introducing section including an objective optical system for introducing light from the incidence optical system as approach route light to the side 6 as a measuring object, an imaging lens 76 for extracting only components in parallel with the approach route light from among the light returned from the side 6 as the measuring object, a pinhole optical element 78, and an optical positional detecting device 80 as a detection optical system.

The optical displacement measuring apparatus 10 is roughly classified into two blocks: one is a body block 60 including the incidence optical system, the imaging lens 76, the pinhole optical element 78, and the detection optical system as one block; and the other is an end block 20 mainly including the light introducing section that includes the objective optical system. The body block 60 and the end block 20 are connected together securely such that light does not leak outside as well as outside light does not enter in.

The incidence optical system includes the light source 70, a collimate lens 72, and a mirror 74 so as to produce approach route light. The light source 70 is a laser light source for emitting laser light. The collimate lens 72 is an optical element having a function to collimate light, i.e., to cause light to be coaxially parallel. It is preferable that the beam diameter of the collimated parallel light be as small as possible within the extent to have light density necessary for the measurement. The mirror 74 is a reflection mirror having a function to introduce the light to the end block 20 as the approach route light 82 of a narrow bunch light by changing the optical axial direction of the parallel light collimated by the collimate lens 72.

The light introducing section includes a lens-barrel portion 22 and the objective optical system including a prism optical element 26 and a mirror optical element 28. The lens-barrel portion 22 is an optical lens barrel blocking off ambient light such that the approach route light 82 passes through the space within the lens barrel. The arrangement of components of the incidence optical system, especially the positional arrangement of the mirror 74 relative to the lens-barrel portion 22, is established such that the approach route light 82 from the incidence optical system is collimated with the axis of the lens-barrel portion 22. The end portion of the lens-barrel portion 22 is provided with a measuring opening formed on the side and the opening is directed to the side 6 that is a measuring object.

The prism optical element 26 is an optical glass circular cylinder with one side cut at a plane perpendicular to the cylinder axis and with the other side cut at a plane inclined to the cylinder axis at a predetermined angle. The vertical plane cut at the vertical plane is directed to the side of the mirror 74 of the incidence optical system such that the vertical plane is to be perpendicular to the axis of the lens-barrel portion 22, i.e., to the approach route light 82 from the incidence optical system. In addition, a columnar shape with a non-circular cross-section may also be cut. In this case, one side may be cut at a plane perpendicular to the optical axis of the prism optical element and the other side may be cut at a plane inclined to its axis at a predetermined angle.

In the prism optical element 26, two inclined planes cut at an inclined angle are provided and the inclined planes are directed to the mirror optical element 28 which will be described later. One of the two inclined planes has a function to totally reflect the approach route light 82 from the incidence optical system while the other has a function to emit the totally reflected light outside by refracting the light to enter the side 6 that is the measuring object. The inclined plane emitting this incident light has a function to receive and refract the reflected light, which is changed in route by the mirror optical element 28, from the side 6 that is the measuring object so as to introduce the light to the imaging lens 76.

The mirror optical element 28 is a reflection mirror having a reflection plane facing the inclined plane of the prism optical element 26, and is arranged herein to incline to the axis of the lens-barrel portion 22 at an angle of 45°. The mirror optical element 28, as mentioned above, has a function to change the optical path of the reflected light from the side 6 that is the measuring object so as to return the light to one of the inclined planes of the prism optical element 26.

The arrangement of the axial direction of the lens-barrel portion 22, i.e., the optical path direction of the approach route light 82, the inclined angles of the two inclined planes, and the angle of the mirror optical element 28 is established in accordance with the following relationship. That is, the approach route light 82 perpendicularly incident on the vertical plane of the prism optical element 26 is totally reflected by one inclined plane of the prism optical element 26; the totally reflected light is outside refracted on the other inclined plane to enter the side 6 that is the measuring object; the light regularly reflected by the side 6 that is the measuring object is reflected by the mirror optical element 28 and refracted on the other inclined plane of the prism optical element 26; and the arrangement of the components are established such that when the light is returned to the lens-barrel portion 22 from the vertical plane to be the way back light, the light proceeds in a direction reverse to the approach route light 82 and in parallel therewith. In Fig. 1, the light in parallel with the approach route light 82 is shown as way back light 84. The regular reflection is designated herein to be the reflection at the same angle of reflection as that of incidence provided that the side 6 that is the measuring object is the flat plane without unevenness.

By establishing the configuration of the components of the objective optical system in such a manner, the light regularly reflected by the side 6 that is the measuring object becomes the way back light 84 in a direction reverse to the approach route light 82 and in parallel therewith. Accordingly, when the side 6 that is the measuring object is displaced in a direction perpendicular to the axial direction of the lens-barrel portion 22, the way back light 84 is displaced vertically to the axial direction of the lens-barrel portion 22, i.e., in the direction perpendicular to the axial direction of the lens-barrel portion 22, keeping in parallel with the approach route light 82. The amount of the displacement is changed in accordance with the displacement of the side 6 that is the measuring object.

In such a manner, the approach route light 82 in parallel with the axial direction of the lens-barrel portion 22 can be returned to the lens-barrel portion 22 by the prism optical element 26 and the mirror optical element 28 such that the approach route light 82 obliquely enters the side 6 displacing perpendicularly to the axial direction of the lens-barrel portion 22 so as to be the way back light proceeding in a reverse direction that is the light regularly reflected by the side 6. Hence, when the lens-barrel portion 22 is considered to have an optical lens-barrel function to introduce the way back light 84 regularly reflected by the side 6 that is the measuring object in parallel with the approach route light 82, the length of the lens-barrel can be freely established. Namely, the length in the axial direction of the lens-barrel portion 22 can be appropriately elongated in accordance with applications.

The imaging lens 76 provided in the body block 60 is a condenser lens established such that the optical axis 86 of the lens is in parallel with the approach route light 82 and preferably, it is coaxially with the axis of the lens-barrel portion 22. The imaging lens 76 is an optical element having a function to focus the light in parallel with the optical axis 86 on a focal point along the optical axis 86, and can use a condenser lens such as a convex lens. Thus, the condensing axis of the imaging lens 76 is set coaxially with the optical axis 86; i.e., preferably, it is coaxially with the axis of the lens-barrel portion 22.

The pinhole optical element 78 is a light-shielding plate having a small pinhole, and is located at the focal point of the imaging lens 76 perpendicularly to the optical axis 86. Then, the pinhole optical element 78 is arranged such that the optical axis 86 just passes through the pinhole. The pinhole optical element 78 has a parallel-light extracting function to lead only constituents of the way back light 84 in parallel with the optical axis 86 to pass through the pinhole by shielding off the returning light 88 non-parallel with the optical axis 86 among the light reflected from the side 6 that is the measuring object, in collaboration with the imaging lens 76.

As described above, the way back light 84 in parallel with the approach route light 82 is the constituent of the light regularly reflected by the side 6 that is the measuring object, and is the light in parallel with the optical axis 86 of the imaging lens 76. In Fig. 1, the light 88 is shown as an example of the returned light non-parallel with the optical axis 86 and irregularly reflected by the side 6 that is the measuring object. The light 88 non-parallel with the optical axis 86 is focused by the imaging lens 76 on a point different from the focal point of the way back light 84 in parallel with the optical axis 86. As mentioned above, the pinhole optical element 78 is arranged such that the optical axis 86 just passes through the pinhole that is located at the focal point, on which the light in parallel with the optical axis 86 is focused by the imaging lens 76. Hence, the light 88 in non-parallel with the optical axis 86 cannot pass through the pinhole of the pinhole optical element 78 due to the shielding when being focused by the imaging lens 76 and it cannot proceed toward the optical positional detecting device 80. In such a manner, the pinhole optical element 78 removes the returned light in non-parallel with the optical axis 86 as noise light from among the light reflected from the side 6 that is the measuring object.

Such a pinhole optical element 78 may use a plate made of a material shielding light and having an appropriate through hole. The thickness of the plate and the size of the pinhole can be established in accordance with the sensibility of the optical positional detecting device 80 and the like.

The optical positional detecting device 80 has a function to detect the change in offset from the optical axis 86 of the way back light 84 parallel with the optical axis 86 in collaboration with the imaging lens 76 and the pinhole optical element 78. The offset denotes a displacement in a direction perpendicular to the optical axis 86. The optical positional detecting device 80 is an optical component arranged at a position opposite to the imaging lens 76 about the focal point of the imaging lens 76 and being capable of detecting the position of the projected light or the position of the light image. The position of the projected light or the position of the light image can be detected as the position projected on the detection plane, e.g. as the position of the center of gravity of the projected light spot or the light image. Such an optical positional detecting device 80 may use a device generally called as a PSD (position sensitive detector) in the market. It may also use an imaging device such as a one-dimensional array CCD (charge coupled device), i.e., a CCD linear image sensor. It is preferable that the detection plane of the optical positional detecting device 80 be perpendicular to the optical axis 86. By such a configuration, the displacement of the side 6 that is the measuring object can be detected as the stroke S of the light projected position on the detection plane.

In such a manner, by configuring the objective optical system at the end portion of the lens-barrel portion 22 attached to the body block 60 with the prism optical element 26 and the mirror optical element 28 that are arranged in a predetermined relationship, the displacement of the side 6 displacing in a direction perpendicular to the axial direction of the lens-barrel portion 22 can be measured. Since the light necessary for measuring the displacement is the approach route light 82 in parallel with the axis of the lens-barrel portion 22 and the way back light 84 in parallel with the approach route light 82, the length of the lens-barrel portion 22 can be freely set in accordance with applications.

In the description above, the arrangement of the components of the objective optical system is established such that the light obliquely enters the measuring object; alternatively, the light perpendicularly may enter the measuring object. Fig. 2 is a drawing showing an example of an optical displacement measuring apparatus 12 having such an objective optical system.

The optical displacement measuring apparatus 12 has a function to measure the displacement of the side 6 within the casing 8 having a narrow hole in the same way as in the optical displacement measuring apparatus 10 described in Fig. 1. The objective optical system at the end block 30 is configured with a prism optical element 36 and a mirror optical element 38.

The prism optical element 36 is an optical glass circular cylinder with one side cut at a plane perpendicular to the cylinder axis in the same way as in the prism optical element 26 described in Fig. 1; however, the cut state is different on the other side. That is, the other side of the prism optical element 36 has the vertical plane cut at a plane perpendicular to the cylinder axis and the inclined plane cut at a plane inclined to the cylinder axis at a predetermined angle. The vertical plane on the other side has a function to lead the approach route light 82 from the incidence optical system to go straight as it is toward the mirror optical element 38. The inclined plane on the other side has a function to lead the light toward the imaging lens 76 by refracting the light from the mirror optical element 38.

The mirror optical element 38, in the same way as in the mirror optical element 28 in Fig. 1, is a reflection mirror arranged to incline to the axis of the lens-barrel portion 32 at an angle of 45°. The mirror optical element 38 has a function to lead the light to perpendicularly enter the side 6 that is the measuring object by changing the optical path of the light emitted from the vertical plane of the prism optical element 36 and a function to return the light to the inclined plane of the prism optical element 36 by receiving the reflection light from the side 6 that is the measuring object to change the light.

The mirror optical element 38 is herein arranged to incline to the axis of the lens-barrel portion 32 at an angle of 45°, so that the optical path of the approach route light 82 can be inclined at 90° to the axis of the lens-barrel portion 32 so as to lead the light to perpendicularly enter the side 6 that is the measuring object.

When the side 6 that is the measuring object is herein a mirror-finished surface, since the regularly reflected light proceeds along the optical path of the approach route light 82 in the reverse direction, the light cannot be condensed by the imaging lens 76, so that the displacement of the side 6 cannot be measured by the pinhole optical element 78 and the optical positional detecting device 80.

However, when the side 6 that is the measuring object returns the reflection light other than the regularly reflected light, the light in the direction reverse to the approach route light 82 is again returned to the lens-barrel portion 32 via the mirror optical element 38 and the prism optical element 36. The light returned from the side 6 that is the measuring object is reflected in various directions and is returned; only the light reflected in a predetermined direction defined by the inclined angle of the inclined plane of the prism optical element 36 becomes the way back light 84 in parallel with the approach route light 82, i.e. in parallel with the optical axis 86 of the imaging lens 76, after the reflection in the mirror optical element 38 and the refraction in the prism optical element 36. The light reflected in directions other than that becomes the light 88 in non-parallel with the optical axis 86 of the imaging lens 76 even through the reflection in the mirror optical element 38 and the refraction in the prism optical element 36.

The way back light 84 in parallel with the optical axis 86 of the imaging lens 76 is offset in the perpendicular direction to the optical axis 86 in accordance with the displacement of the side 6 that is the measuring object, keeping in parallel with the optical axis 86. Hence, by the functions of the pinhole optical element 78 and the optical positional detecting device 80, the displacement of the side 6 that is the measuring object can be measured as the stroke S of the light projected position on the detection plane.

In such a manner, by configuring the objective optical system at the end portion of the lens-barrel portion 32 attached to the body block 60 with the prism optical element 26 and the mirror optical element 28 that are arranged in a predetermined relationship, the displacement of the side 6 can be measured by perpendicularly irradiating the side 6 displacing in a direction perpendicular to the axial direction of the lens-barrel portion 32 with light. In this case, even when the side 6 that is the measuring object is moved in the displacing direction, the position of the measuring point is scarcely changed. Since the light necessary for measuring the displacement is also the approach route light 82 in parallel with the axis of the lens-barrel portion 32 and the way back light 84 in parallel with the approach route light 82, the length of the lens-barrel portion 32 can be freely set in accordance with applications.

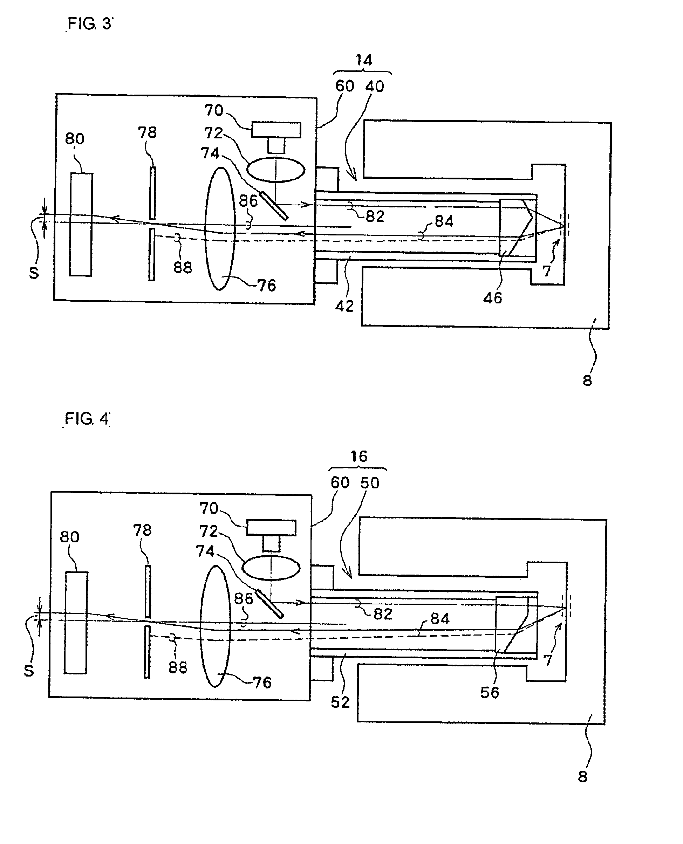

In the description above, the mirror optical element is arranged in the objective optical system, so that the displacement of the measuring object displacing in a direction perpendicular to the axial direction of the lens-barrel portion is measured. By omitting the mirror optical element herein, the displacement of the measuring object displacing in the axial direction of the lens-barrel portion can be measured. Figs. 3 and 4 are drawings showing the configuration of such an optical displacement measuring apparatus.

An optical displacement measuring apparatus 14 shown in Fig. 3 has a function to measure the displacement of a bottom plane 7 that is a far wall of the casing 8 having a narrow hole. The optical displacement measuring apparatus 14 corresponds to the apparatus in that the mirror optical element 28 in the optical displacement measuring apparatus 10 shown in Fig. 1 is omitted in the objective optical system of an end block 40, and an opening is formed on the far wall of a lens-barrel portion 42.

A prism optical element 46, in the same way as in the prism optical element 26 described in Fig. 1, is an optical glass circular cylinder with one side cut at a plane perpendicular to the cylinder axis and with the other side cut at a plane inclined to the cylinder axis at a predetermined angle. In the prism optical element 46, two inclined planes cut at an inclined angle are provided and the inclined planes are directed toward the opening formed on the far wall of the lens-barrel portion 42. One of the two inclined planes has a function to obliquely refract the approach route light 82 from the incidence optical system so as to obliquely irradiate the bottom plane 7 that is the measuring object while the other has a function to introduce the light to the imaging lens 76 by refracting the light reflected from the bottom plane 7 that is the measuring object.

The respective inclined angles of the two inclined planes of the prism optical element 46 are herein established such that the light regularly reflected at the bottom plane 7 that is the measuring object becomes the way back light in parallel with the optical axis 86 of the imaging lens. Namely, the respective inclined angles of the two inclined planes are established to be symmetrical with each other about the axis of the lens-barrel portion 42.

In such a manner, by configuring the objective optical system at the end portion of the lens-barrel portion 42 attached to the body block 60 with the prism optical element 46 arranged in a predetermined relationship, the displacement of the bottom plane 7 can be measured by obliquely irradiating the bottom plane 7 displacing in the axial direction of the lens-barrel portion 42 with light. In this case also, since the light necessary for measuring the displacement is also the approach route light 82 in parallel with the axis of the lens-barrel portion 42 and the way back light 84 in parallel with the approach route light 82, the length of the lens-barrel portion 42 can be freely set in accordance with applications.

An optical displacement measuring apparatus 16 shown in Fig. 4, in the same way as in the optical displacement measuring apparatus 14 shown in Fig. 3, has a function to measure the displacement of the bottom plane 7 that is the far wall of the casing 8 having a narrow hole. The optical displacement measuring apparatus 16 corresponds to the apparatus in that the mirror optical element 38 in the optical displacement measuring apparatus 12 shown in Fig. 2 is omitted in the objective optical system of an end block 50, and an opening is formed on the far wall of a lens-barrel portion 52.

A prism optical element 56, in the same configuration as that of the prism optical element 36 described in Fig. 2, is an optical glass circular cylinder with one side cut at a plane perpendicular to the cylinder axis, and the other side has the vertical plane cut at a plane perpendicular to the cylinder axis and the inclined plane cut at a plane inclined to the cylinder axis at a predetermined angle. The vertical plane on the other side has a function to lead the approach route light 82 from the incidence optical system to go straight as it is and to perpendicularly enter the bottom plane 7 that is the measuring object. The inclined plane on the other side has a function to lead the light toward the imaging lens 76 by refracting the light from the bottom plane 7 that is the measuring object.

Then, as described above in conjunction with Fig. 2, when the bottom plane 7 that is the measuring object is a mirror-finished surface, the displacement of the bottom plane 7 cannot be measured; when the side 6 that is the measuring object returns the reflection light other than the regularly reflected light, in the light, only the light reflected in a predetermined direction defined by the inclined angle of the inclined plane of the prism optical element 56 becomes the way back light 84 in parallel with the approach route light 82, i.e. in parallel with the optical axis 86 of the imaging lens 76, so that by the functions of the pinhole optical element 78 and the optical positional detecting device 80, the displacement of the bottom plane 7 that is the measuring object can be measured as the stroke S of the light projected position on the detection plane of the optical positional detecting device 80.

In such a manner, by configuring the objective optical system at the end portion of the lens-barrel portion 52 attached to the body block 60 with the prism optical element 56 arranged in a predetermined relationship, the displacement of the bottom plane 7 can be measured by perpendicularly irradiating the bottom plane 7 displacing in the axial direction of the lens-barrel portion 52 with light. In this case, even when the bottom plane 7 that is the measuring object is moved in the displacing direction, the position of the measuring point is scarcely changed. In this case, since the light necessary for measuring the displacement is also the approach route light 82 in parallel with the axis of the lens-barrel portion 52 and the way back light 84 in parallel with the approach route light 82, the length of the lens-barrel portion 52 can be freely set in accordance with applications.

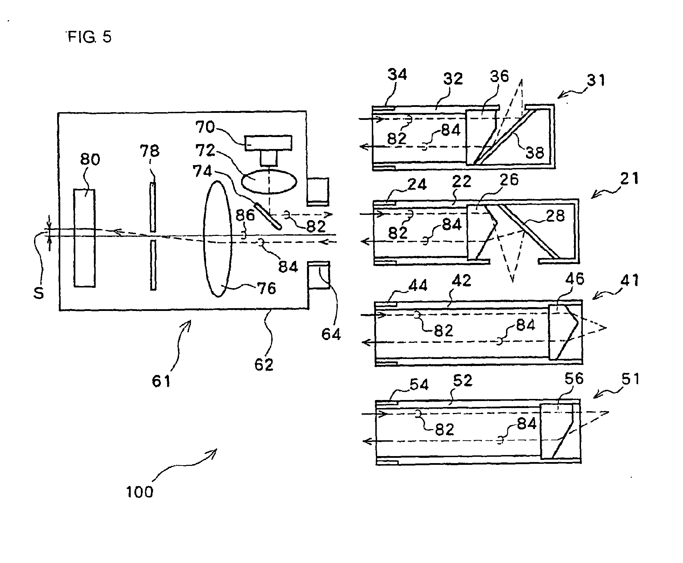

Fig. 5 is a drawing showing the configuration of a multifunctional optical displacement measuring apparatus 100 in that an end block is replaceable on a body block for corresponding to the displacement measuring of a plurality of kinds of a measuring object, so that any one of a plurality of kinds of the end block can be attached.

The multifunctional optical displacement measuring apparatus 100 includes a body block 61 and a plurality of kinds of end blocks 21, 31, 41, and 51. The body block 61, in the same configuration as that of the body block 60 described in Fig. 1, herein includes the incidence optical system, the imaging lens 76, the pinhole optical element 78, and the detection optical system that are arranged within a body case 62. In the body case 62, an opening for emitting the approach route light 82 outside and receiving the way back light and a body block attachment fixture 64 having attaching means formed around the opening are provided.

As for the plurality of kinds of end blocks, four kinds of the end blocks 21, 31, 41, and 51 are herein shown; end blocks other than these may be of course included. The end blocks 21, 31, 41, and 51 shown herein correspond to the end blocks 20, 30, 40, and 60 described in Figs. 1 to 4, respectively. It is different that end block attachment fixtures 24, 34, 44, and 54 having attaching means are provided in bases of the lens-barrel portions 22, 32, 42, and 52, respectively.

The attaching means of the body attachment fixture 64 and the attaching means of the end block attachment fixtures 24, 34, 44, and 54 provided in the plurality of kinds of the end blocks 21, 31, 41, and 51, respectively, have a function to securely join between the body block 61 and any one of the end blocks 21, 31, 41, and 51, in cooperation with each other. The attaching means may use the combination of an internal thread and an external thread.

For example, for corresponding to the measuring object displacing in a perpendicular direction to the axis of the lens-barrel portion and the measuring object is obliquely irradiated with light, the end block 21 is attached to the body block 60. By doing so, the optical displacement measuring apparatus 10 described in Fig. 1 can be configured.

Also, for corresponding to the measuring object displacing in a perpendicular direction to the axis of the lens-barrel portion and the measuring object is perpendicularly irradiated with light, the end block 31 is attached to the body block 60. By doing so, the optical displacement measuring apparatus 12 described in Fig. 2 can be configured.

Also, for corresponding to the measuring object displacing in the axial direction of the lens-barrel portion and the measuring object is obliquely irradiated with light, the end block 41 is attached to the body block 60. By doing so, the optical displacement measuring apparatus 14 described in Fig. 3 can be configured.

Also, for corresponding to the measuring object displacing in the axial direction of the lens-barrel portion and the measuring object is perpendicularly irradiated with light, the end block 51 is attached to the body block 60. By doing so, the optical displacement measuring apparatus 16 described in Fig. 4 can be configured.

In each end block to be attached to the body block 61, the objective optical system is established such that the light necessary for measuring the displacement can use the approach route light in parallel with the axis of the lens-barrel portion and the way back light in parallel with the approach route light. By doing so, the length of the lens-barrel portion can be freely set in accordance with applications, so that a plurality of kinds of the end blocks can be replaceably prepared. By selecting any one of the plurality of kinds of the end blocks in accordance with an application for attaching it to one kind of the body block 61, a multifunctional optical displacement measuring apparatus that can correspond to the demand for a plurality of kinds of displacement measurements can be configured.

### [Reference Numerals]

6: side, 7: bottom plane, 8: casing, 10, 12, 14, 16: optical displacement measuring apparatus, 20, 21, 30, 31, 40, 41, 50, 51: end block, 22, 32, 42, 52: lens-barrel portion, 24, 34, 44, 54: end block attachment fixture, 26, 36, 46, 56: prism optical element, 28, 38: mirror optical element, 60, 61: body block, 62: body case, 64: body block attachment fixture, 70: light source, 72: collimate lens, 74: mirror, 76: imaging lens, 78: pinhole optical element, 82: approach route light, 84: way back light, 86: optical axis, 88: returning light, 100: multifunctional optical displacement measuring apparatus

## Claims

1. An optical displacement measuring apparatus measuring the displacement between an objective optical system and a measuring object by irradiating the measuring object with light from a light source via a light introducing section including the objective optical system to detect the reflected light from the measuring object with a detection section,
the light introducing section comprising:
a lens-barrel portion introducing light from the light source to the objective optical system as approach route light; and
a prism optical element, as the objective optical system, leading the approach route light to the side of the measuring object by changing the optical path of the approach route light so as to return the light to the lens-barrel portion as way back light by refracting the light from the side of the measuring object,
the detection section comprising:
an imaging lens having an optical axis in parallel with the approach route light for condensing the way back light;
a pinhole optical element arranged at the focal point of the imaging lens to allow only the component of the way back light in parallel with the approach route light to pass through; and
an optical positional detecting device detecting the projected position of the light that has passed through the pinhole optical element,
the prism optical element including at least one inclined plane cut at a plane inclined to its optical axis at a predetermined angle.

2. The apparatus according to Claim 1, wherein the light introducing section, as the objective optical system, further includes a mirror optical element arranged between the prism optical element and a measuring object displacing in a perpendicular direction to the axis of the lens-barrel portion to lead the light to enter the measuring object by changing the optical path of the light from the prism optical element so as to return the light to the prism optical element by changing the optical path of the reflected light from the measuring object.

3. A multifunctional optical displacement measuring apparatus measuring the displacement between an objective optical system and a measuring object by irradiating the measuring object with light from a light source via a light introducing section including the objective optical system to detect the reflected light from the measuring object with a detection section, the multifunctional optical displacement measuring apparatus comprising;
a body block including the light source and the detection section; and
a plurality of kinds of an end block having an attachment fixture replaceably attached to the body block and including the light introducing section having the objective optical system that corresponds to a plurality of kinds of the measuring object,
wherein any one of the plurality of kinds of the end block attached to the body block includes a lens-barrel portion leading the light from each light source to the objective optical system as approach route light and a prism optical element, as the objective optical system, leading the light to the side of the measuring object by changing the optical path of the approach route light to return the light as way back light to the lens-barrel portion by refracting the light from the side of the measuring object,
wherein the detection section of the body block includes an imaging lens having an optical axis in parallel with the approach route light for condensing the way back light; a pinhole optical element arranged at the focal point of the imaging lens to allow only the component of the way back light in parallel with the approach route light to pass through; and an optical positional detecting device detecting the projected position of the light that has passed through the pinhole optical element, and
wherein the prism optical element includes at least one inclined plane cut at a plane inclined to its optical axis at a predetermined angle.

4. The multifunctional optical displacement measuring apparatus according to Claim 3, wherein the plurality of kinds of the end block include:
a first end block including the prism optical element that corresponds to a measuring object that is displacing in a perpendicular direction to the axis of the lens-barrel portion, the measuring object plane of the measuring object being obliquely irradiated with light, the prism optical element having a plurality of inclined planes, and further a mirror optical element arranged between the measuring object and the prism optical element to allow the light to enter the measuring object by changing the optical path of the light from the prism optical element so as to return the light to the prism optical element by changing the optical path of the reflected light from the measuring object;
a second end block including the prism optical element that corresponds to a measuring object that is displacing in a perpendicular direction to the axis of the lens-barrel portion, the measuring object plane of the measuring object being perpendicularly irradiated with light, the prism optical element having a plane that is perpendicularly cut to the optical axis and at least one inclined plane inclined to the optical axis, and further the mirror optical element arranged between the measuring object and the prism optical element to allow the light to enter the measuring object by changing the optical path of the light from the prism optical element so as to return the light to the prism optical element by changing the optical path of the reflected light from the measuring object;
a third end block including the prism optical element that corresponds to a measuring object that is displacing in the axial direction of the lens-barrel portion, the measuring object plane of the measuring object being obliquely irradiated with light, the prism optical element having a plurality of inclined planes; and
a fourth end block including the prism optical element that corresponds to a measuring object that is displacing in the axial direction of the lens-barrel portion, the measuring object plane of the measuring object being perpendicularly irradiated with light, the prism optical element having a plane perpendicularly cut to the optical axis and at least one inclined plane inclined to the optical axis.
